# EUROPEAN PATENT APPLICATION

(11) **EP 4 764 503 A1**
(43) Date of publication of application: **24.06.2026**
(21) Application number: 24854085.8
(22) Date of filing: 04.07.2024
(51) Int. Cl.: G01N 35/02, G01N 35/00, G01N 35/04

(54) **AUTOMATIC ANALYSIS DEVICE AND AUTOMATIC ANALYSIS METHOD**

(30) Priority: 14.08.2023 JP 2023131759
(71) Applicant: HITACHI HIGH-TECH CORPORATION, Tokyo 105-6409 (JP)
(72) Inventor: NAKAMURA, Hiroki, Tokyo 105-6409 (JP); NITTA, Hiroaki, Tokyo 105-6409 (JP); HAGIWARA, Takaaki, Tokyo 105-6409 (JP)
(74) Representative: MERH-IP Matias Erny Reichl Hoffmann Patentanwälte PartG mbB
(86) International application number: PCT/JP2024/024237
(87) International publication number: WO 2025/037494

(57) **Abstract**

When an unanalyzable abnormality occurs in a certain specimen and a predetermined condition is satisfied, analyzable specimens can be analyzed even when a setting of collecting a rack loaded with the specimen is enabled. An automatic analysis device of the disclosure performs a preset control of a first control or a second control. The first control is a control for, when a dispensing abnormality occurred in the specimen, continuing analysis scheduled for other specimens in the rack that carries the specimen container containing the specimen. The second control is a control for, when a dispensing abnormality occurred in the specimen, canceling analysis scheduled for other specimens in the rack that carries the specimen container containing the specimen and transporting the rack to the rack storage portion by the transport mechanism. The automatic analysis device performs the first control when a dispensing abnormality occurs in the specimen while the second control is set and a predetermined condition is satisfied (see Fig. 2).

## Description

### Technical Field

The present disclosure relates to an automatic analysis device and an automatic analysis method. For example, the disclosure relates to an automatic analysis device that performs quantitative and qualitative analysis of biological samples such as blood and urine, and particularly to an automatic analysis device including a transport device that transports a sample container to the analysis device.

### Background Art

Automatic analysis devices that automatically perform quantitative and qualitative analysis of biological samples such as blood and urine have become increasingly widespread, particularly in large hospitals and clinical testing centers that need to process many patient specimens in a short time. Various types of large, medium, and small automatic analysis devices have been developed depending on the processing capacity. In the medium and large devices, a plurality of specimen containers containing specimens are held in holders referred to as specimen racks and transported to the analysis devices via transport lines (transport devices). Some devices automatically output analysis results when a laboratory technician simply inserts a rack into a specimen rack inlet.

Here, the automatic analysis device transports the rack inserted into the specimen rack inlet via the transport line having a belt conveyer shape, and recognizes and analyzes a rack type and a specimen using a barcode reader on the line during transport.

As described above, in facilities where many patient specimens are processed in one day, it is desirable for automatic analysis devices to output analysis results as fast as possible.

PTL 1 discloses means for outputting many analysis results that specifies a specimen required to be reanalyzed due to occurrence of an abnormality or a specimen required to be collected for reanalysis, interrupts analysis of a specimen rack loaded with a specimen, and gives an instruction to collect the specimen.

### Citation List

### Patent Literature

PTL 1: JP2016-14686A

### Summary of Invention

### Technical Problem

In the above-described device of the related art, when an abnormality that makes analysis impossible such as a lack of samples occurs, analysis of the rack loaded with the specimen is interrupted and the rack is collected once, thereby making it possible to collect a specific specimen fast without waiting for completion of analysis of other specimens loaded on the rack.

However, the above-described means has a problem in that analyzable specimens remain in a rack storage portion without being analyzed in a situation in which an operator cannot immediately take out the rack and the specimen collected by the device.

The above-mentioned problem is particularly significant for urgent specimens for which analysis results are required to be output particularly fast.

The disclosure proposes a technology that, when an abnormality being unanalyzable occurs in a certain specimen and a predetermined condition is satisfied, makes it possible to analyze analyzable specimens even when a setting of collecting a rack loaded with the specimen is enabled.

### Solution to Problem

An example of an automatic analysis device according to the disclosure is an automatic analysis device including:
a transport mechanism that transports a rack carrying a plurality of specimen containers containing specimens to be analyzed to a dispensing mechanism;
a dispensing mechanism that dispenses the specimens carried in the rack transported by the transport mechanism;
a rack storage portion that stores the rack at a position from which the rack is able to be taken out; and
a control unit that performs a preset control of a first control or a second control, in which
the first control is a control for, when a dispensing abnormality occurs in the specimen, continuing analysis scheduled for other specimens in the rack that carries the specimen container containing the specimen,
the second control is a control for, when a dispensing abnormality occurred in the specimen, canceling analysis scheduled for other specimens in the rack that carries the specimen container containing the specimen and transporting the rack to the rack storage portion by the transport mechanism, and
the control unit performs the first control when a dispensing abnormality occurs in the specimen while the second control is set and a predetermined condition is satisfied.

An example of an automatic analysis method according to the disclosure is an automatic analysis method using an automatic analysis device including,
a transport mechanism that transports a rack carrying a plurality of specimen containers containing specimens to be analyzed to a dispensing mechanism,
a dispensing mechanism that dispenses the specimens carried in the rack transported by the transport mechanism,
a rack storage portion that stores the rack at a position from which the rack is able to be taken out, and
a control unit that performs a preset control of a first control or a second control, in which
the first control is a control for, when a dispensing abnormality occurred in the specimen, continuing analysis scheduled for other specimens in the rack that carries the specimen container containing the specimen,
the second control is a control for, when a dispensing abnormality occurred in the specimen, canceling analysis scheduled for other specimens in the rack that carries the specimen container containing the specimen and transporting the rack to the rack storage portion by the transport mechanism, and
the automatic analysis method includes causing the control unit to perform the first control when a dispensing abnormality occurs in the specimen while the second control is set and a predetermined condition is satisfied.

### Advantageous Effects of Invention

When an unanalyzable abnormality occurs and a predetermined condition is satisfied, analyzable specimens can be analyzed even when a setting of collecting a rack loaded with a specimen is enabled, and thus it is possible to minimize a period of time during which the analyzable specimens remain in a rack storage portion without being analyzed.

### Brief Description of Drawings

[Fig. 1] Fig. 1 is a schematic diagram showing an overall configuration of an automatic analysis device according to an example of the disclosure.
[Fig. 2] Fig. 2 is a flowchart showing a flow of processing of the automatic analysis device according to the example of the disclosure.
[Fig. 3] Fig. 3 is a diagram showing a configuration of a GUI related to an operation of the automatic analysis device according to the example of the disclosure.

### Description of Embodiments

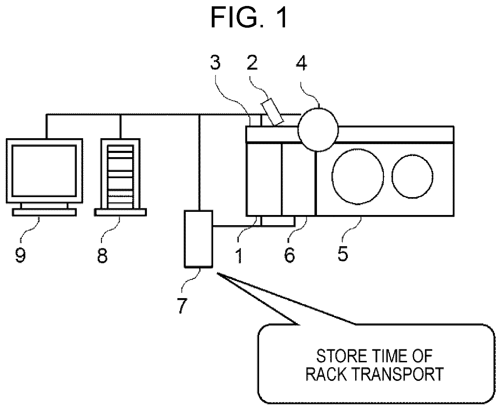

The configuration and the operation of an automatic analysis device according to an example of the disclosure will be described below with reference to Figs. 1 to 3.

### [Example 1]

Fig. 1 is a schematic diagram showing an overall configuration of the automatic analysis device according to the example of the disclosure. The automatic analysis device is a device that automatically performs analysis (or measurement; the same applies below) of specimens, and executes an automatic analysis method according to the example.

The automatic analysis device according to the example includes a specimen rack input portion 1, an ID reading unit 2, a transport mechanism 3, a rack standby portion 4, an analysis module 5, a rack storage portion 6, and an overall management computer 7 (control unit).

The specimen rack input portion 1 is a portion for inputting a plurality of specimen racks each holding a plurality of specimens (samples). The analysis module 5 is disposed along the transport mechanism 3.

The transport mechanism 3 transports a specimen rack (rack) loaded with a plurality of specimen containers containing specimens to be analyzed from the specimen rack input portion 1 to a dispensing mechanism of the analysis module 5. The transport mechanism 3 also transports specimens of which analyzation by the analysis module 5 is completed to the rack standby portion 4. The transport mechanism 3 also transports specimen racks for which no analysis request was made from the specimen rack input portion 1 to the rack storage portion 6.

The rack standby portion 4 is installed in the transport mechanism 3 to which racks loaded with standard specimens, precision control samples, general specimens, and the like are transported. The rack standby portion 4 is a line mechanism that holds one or more specimen racks (including, for example, specimen racks scheduled for analysis, but not limited thereto) and causes the specimen racks to stand by. The rack standby portion 4 can hold a rack loaded with any sample transported by the transport mechanism 3 for any period of time, and can supply the rack again to the analysis module 5 or the rack storage portion 6 at any timing.

The rack storage portion 6 stores a specimen rack at a position where the rack can be taken out.

The automatic analysis device includes the overall management computer 7 that performs necessary control on the specimen rack input portion 1, the ID reading unit 2, the transport mechanism 3, the rack standby portion 4, the analysis module 5, and the rack storage portion 6. The automatic analysis device includes an operation unit 8 for inputting information and a display device 9 that displays analysis results and the like, and the operation unit 8 and the display device 9 are connected to the overall management computer 7.

A specimen held by the specimen rack is associated with a specimen ID indicating attribute information of the specimen (a reception number, a patient name, a requested analysis item, whether it is a trace specimen, whether it is a general specimen, whether it is an urgent specimen, and the like). A rack ID indicating rack specification information such as a rack number is associated with the specimen rack. The specimen rack placed in the specimen rack input portion 1 is transported by the transport mechanism 3, and when the specimen rack moves to the transport mechanism 3, the specimen ID and the specimen rack ID are read by the ID reading unit 2 and transmitted to the overall management computer 7.

Then, the specimen rack is transported to the analysis module 5 via the rack standby portion 4. The analysis module 5 includes a dispensing mechanism and the dispensing mechanism dispenses specimens loaded on the specimen rack transported by the transport mechanism 3.

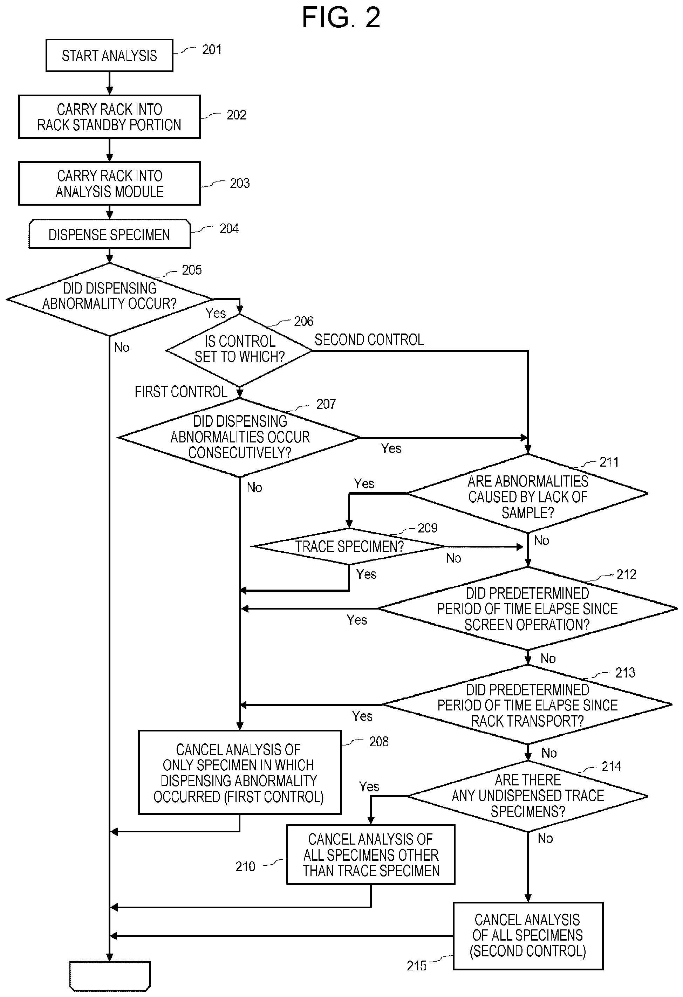

During the dispensing by the dispensing mechanism, a specimen dispensing abnormality may occur. When a specimen dispensing abnormality occurs, the overall management computer 7 can perform a preset control of a first control or a second control (details will be described later with reference to Fig. 2). Which of the first control or the second control is set can be stored in a storage device of the overall management computer 7, for example, as rack collection request information.

When a dispensing abnormality occurs, the overall management computer 7 executes a rack transport scheduler program and functions as a rack transport scheduler. The rack transport scheduler confirms whether the first control or the second control is set with reference to the information on the specimens loaded on the rack and the rack collection request information stored in the storage device of the overall management computer 7, continues to analyze the specimens or interrupts the analysis of the specimens based on a predetermined condition, and creates a rack collection schedule to perform rack collection.

Fig. 2 is a flowchart showing a flow of processing of the automatic analysis device according to the example of the disclosure. The flowchart relates to the automatic analysis method according to the example. The operation of the automatic analysis device will be described below with reference to Fig. 2.

In step 201, the overall management computer 7 that received an analysis start request from the operation unit 8 and the display device 9 gives an instruction to start analysis to the analysis module 5, and sets a state of the entire automatic analysis device to an analysis state.

In step 202, the automatic analysis device reads a rack ID and a specimen ID of the rack with the ID reading unit 2, and carries the rack into the rack standby portion 4.

In step 203, the automatic analysis device carries the rack carried into the rack standby portion 4 into the analysis module 5.

In step 204, the automatic analysis device dispenses the specimens held in the rack transported to the analysis module. Here, the specimens can be dispensed based on request information stored in the overall management computer 7. Step 204 and the subsequent processes are repeatedly executed for each specimen to be dispensed.

In step 205, the overall management computer 7 determines whether a dispensing abnormality occurred during specimen dispensing. Dispensing abnormalities include clogging of specimen, empty suction of specimen, and the like. The automatic analysis device includes a configuration for detecting such dispensing abnormalities. In particular, by determining clogging of specimen and empty suction of specimen as dispensing abnormalities, it is possible to appropriately detect abnormalities to be dealt with.

In step 205, when a dispensing abnormality did not occur, the processing in Fig. 2 ends and a dispensing operation is continued. When a dispensing abnormality did occur, the processing proceeds to step 206.

In step 206, the overall management computer 7 refers to whether the first control or the second control is set. When the first control is set, the processing proceeds to step 207. In principle, the first control is a control for canceling the analysis of only a specimen in which a dispensing abnormality occurred and continuing to analyze other specimens. In other words, the first control is a control for, when a dispensing abnormality occurred in a specimen, continuing analysis scheduled for other specimens in a specimen rack that carries a specimen container containing the specimen.

In step 206, when the second control is set, the processing proceeds to step 211. In principle, the second control is a control for canceling analysis of all specimens in the specimen rack. In other words, the second control is a control for, when a dispensing abnormality occurred in a specimen, canceling analysis scheduled for other specimens in a specimen rack that carries a specimen container containing the specimen and transporting the specimen rack to the rack storage portion 6 by the transport mechanism 3.

In step 207, the overall management computer 7 determines whether specimen dispensing abnormalities occurred a plurality of times consecutively (for example, for a plurality of specimens dispensed consecutively). When specimen dispensing abnormalities did not occur a plurality of times consecutively, the processing proceeds to step 208.

In step 208, the overall management computer 7 executes the first control. That is, the overall management computer 7 cancels analysis of the specimen in which a dispensing abnormality occurred, and continues to dispense undispensed specimens.

In step 207, when specimen dispensing abnormalities occurred a plurality of times consecutively, the processing proceeds to step 211 and transitions to the flow of the second control. As such, the overall management computer 7 performs the second control when specimen dispensing abnormalities occur a plurality of times consecutively while the first control is set.

When dispensing abnormalities occurred a plurality of times consecutively, it is assumed that there is a high probability that dispensing abnormalities will also occur in other specimens in the same specimen rack. However, according to the automatic analysis device of the example, the analysis of other specimens is canceled in such situations, and thus frequent occurrence of dispensing abnormalities can be prevented.

In step 211, the overall management computer 7 determines whether a cause of a dispensing abnormality is lack of samples. Note that the automatic analysis device has a configuration for specifying the cause of a dispensing abnormality, and such a configuration can be appropriately designed by a person skilled in the art based on the known technology and the like.

When the cause of a dispensing abnormality is lack of samples, the processing proceeds to step 209. When the cause of a dispensing abnormality is not lack of samples, the processing proceeds to step 212.

In step 209, the overall management computer 7 determines whether a specimen in which lack of samples occurred is a trace specimen. When the specimen is a trace specimen, the processing proceeds to step 208 and transitions to the flow of the first control. The transition may be executed particularly when a specimen in which empty suction occurred due to lack of samples is a trace specimen. In other words, when a specimen dispensing abnormality occurs while the second control is set, the overall management computer 7 determines that a predetermined condition is satisfied and performs the first control when a specimen in which empty suction occurred is a trace specimen.

With such divergence processing, analysis is continued for other specimens with a low probability of empty suction, and thus it is possible to prevent unnecessary cancelation.

In step 209, when a specimen in which lack of samples occurred is not a trace specimen, the processing proceeds to step 212.

In step 212, the overall management computer 7 determines whether a predetermined period of time or more elapsed since the last time a user operated the automatic analysis device via the display device 9. When the predetermined period of time or more did elapse, it is determined that a predetermined condition is satisfied, and the processing proceeds to step 208 to transition to the flow of the first control.

In general, when a long period of time elapsed since the user last operated the display device 9, the user may be out of work, and an immediate response is unlikely to be performed even when a specimen is collected by the second control. Here, by divergence in step 212, the analysis of analyzable specimens is prioritized by the first control, and thus the analysis can be performed efficiently.

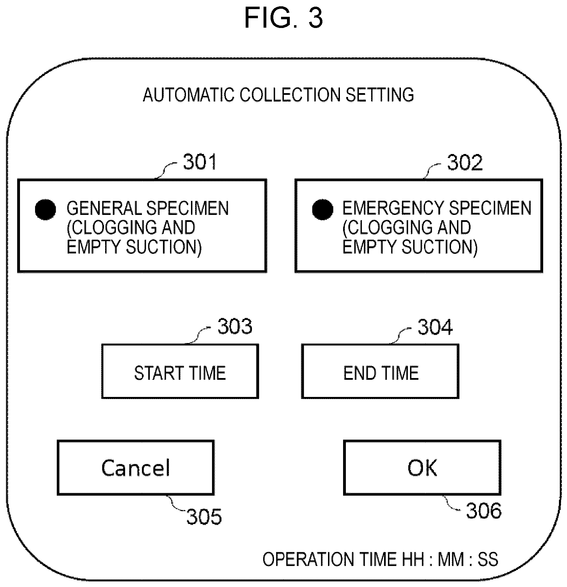

In particular, the overall management computer 7 may store a time when the user operated the automatic analysis device via the display device 9. With such a configuration, determination in step 212 can be executed appropriately. In an example in Fig. 3 described below, the time is displayed as an operation time.

In step 212, when a predetermined period of time or more did not elapse, the processing proceeds to step 213.

In step 213, the overall management computer 7 determines whether a predetermined period of time did elapse since the transport mechanism 3 last transported a specimen rack to the dispensing mechanism of the analysis module 5. When the predetermined period of time did elapse, the processing proceeds to step 208 and transitions to the flow of the first control.

In general, when a long period of time did elapse since a specimen rack was last transported, the user may be out of work, and an immediate response is unlikely to be performed even when a specimen is collected by the second control. Here, by divergence in step 213, the analysis of analyzable specimens is prioritized by the first control, and thus the analysis can be performed efficiently.

In particular, the overall management computer 7 may store a time when the transport mechanism 3 transports a specimen rack to the dispensing mechanism of the analysis module 5, as shown in Fig. 1. With such a configuration, determination in step 213 can be performed appropriately.

In step 213, when a predetermined period of time did not elapse, the processing proceeds to step 214.

In step 214, the overall management computer 7 determines whether there are any undispensed trace specimens in the specimen rack. When there are any undispensed trace specimens, the processing proceeds to step 210. When there are no undispensed trace specimens, the processing proceeds to step 215.

In step 210, the overall management computer 7 cancels the analysis of all specimens other than the trace specimens among the specimens held in the specimen rack, and continues the analysis for all trace specimens.

Step 210 may be executed particularly when empty suction of specimen occurs. In other words, when a specimen dispensing abnormality (for example, empty suction) occurred while the second control is set and there is an undispensed trace specimen in a specimen rack that carries a specimen container containing the specimen, the overall management computer 7 continues analysis scheduled for the trace specimen and cancels analysis scheduled for specimens other than the trace specimen (such a control may be considered to be different from the first control and the second control, but may also be considered to be a part of the second control).

In general, the amount of specimen may decrease due to evaporation over time. Since the effect of evaporation over time is relatively large particularly for a trace specimen, even when the specimen is collected by the second control, there is a possibility that an appropriate analysis cannot be performed afterward. By divergence in step 214, analysis is executed for the trace specimen, and thus it is possible to avoid evaporation of the trace specimen and efficiently perform the analysis.

In step 215, the overall management computer 7 executes the second control. In other words, analysis scheduled for other specimens in the specimen rack that carries the specimen container containing the specimen is canceled, and the specimen rack is transported from the rack standby portion 4 to the rack storage portion 6 by the transport mechanism 3. Here, using the rack standby portion 4, an undispensed specimen rack can be appropriately held and caused to stand by.

As such, according to the automatic analysis device and the automatic analysis method of the example, when a dispensing abnormality occurs and a predetermined condition is satisfied, analyzable specimens can be analyzed even when a setting of the second control of collecting a specimen rack carrying the specimen is enabled, and thus it is possible to minimize a period of time during which the analyzable specimens remain in the rack storage portion 6 without being analyzed.

Next, an operation of the automatic analysis device by a user will be described using Fig. 3. Fig. 3 is a diagram showing a configuration of a GUI related to the operation of the automatic analysis device according to the example.

The GUI is displayed on, for example, the display device 9. The display device 9 is configured such that the user can operate the automatic analysis device by directly touching the display device 9. Such a configuration can be implemented, for example, using a known touch panel. Such a configuration allows intuitive operation, thereby improving user convenience.

In the GUI, the user can perform an automatic rack collection setting for general specimens by operating a general specimen selection button 301. For example, a GUI for selecting either the first control or the second control for general specimens is displayed, making it possible to set either the first control or the second control.

Similarly, the user can operate an emergency specimen selection button 302 and perform an automatic rack collection setting for emergency specimens. For example, a GUI for selecting either the first control or the second control for emergency specimens is displayed, making it possible to set either the first control or the second control.

Such settings may be individually selectable depending on the content of a dispensing abnormality. For example, in the automatic analysis device, it is possible to selectively set in advance which of the first control or the second control will be performed when clogging of specimen occurs. Similarly, it is possible to selectively set in advance which of the first control or the second control will be performed when empty suction of specimen occurs. Such a configuration allows flexible settings depending on the content of a dispensing abnormality.

In particular, according to the example in Fig. 3, such settings can be performed via the GUI. For example, the automatic analysis device includes a GUI for setting whether the first control or the second control is to be performed when clogging of specimen occurs, and similarly includes a GUI for setting whether the first control or the second control is to be performed when empty suction of specimen occurs. Such a configuration allows intuitive operation, thereby improving user convenience.

As such, according to the GUI in Fig. 3, the overall management computer 7 performs a preset control of the first control or the second control for a plurality of types of specimens (general specimens and emergency specimens). Such a configuration allows flexible settings depending on the type of specimen.

In the GUI, the user can input a start time of a time slot in which the second control is set by operating a start time button 303. The overall management computer 7 receives the input, sets the first control until the start time, and sets the second control after the start time. With such a configuration, it is possible to designate in advance automatic switching of the control content at a specific time, thereby improving user convenience.

Similarly, in the GUI, the user can input an end time of a time slot in which the second control is set by operating an end time button 304. The overall management computer 7 receives the input, sets the second control until the end time, and sets the first control after the end time. With such a configuration, it is possible to designate in advance automatic switching of the control content at a specific time, thereby improving user convenience.

In the GUI, when the user operates an OK button 306, the overall management computer 7 stores the contents input via the GUI until then in the storage device of the overall management computer 7.

In the GUI, when the user operates a cancel button 305, the overall management computer 7 does not store the contents input via the GUI until then in the storage device of the overall management computer 7, and closes the GUI.

As described above, according to the example, when a dispensing abnormality occurs, it is possible to interrupt the analysis of a specimen rack and collect the specimen, but when a predetermined condition is satisfied, it is possible to prioritize the analysis of analyzable specimens in the specimen rack, thereby making it possible to obtain analysis results fast.

### Reference Signs List

1: specimen rack input portion
2: ID reading unit
3: transport mechanism
4: rack standby portion
5: analysis module
6: rack storage portion
7: overall management computer (control unit)
8: operation unit
9: display device
301: general specimen selection button
302: emergency specimen selection button
303: start time button
304: end time button
305: cancel button
306: OK button

## Claims

1. An automatic analysis device comprising:
a transport mechanism that transports a rack carrying a plurality of specimen containers containing specimens to be analyzed to a dispensing mechanism;
a dispensing mechanism that dispenses the specimens carried in the rack transported by the transport mechanism;
a rack storage portion that stores the rack at a position from which the rack is able to be taken out; and
a control unit that performs a preset control of a first control or a second control, wherein
the first control is a control for, when a dispensing abnormality occurred in the specimen, continuing analysis scheduled for other specimens in the rack that carries the specimen container containing the specimen,
the second control is a control for, when a dispensing abnormality occurred in the specimen, canceling analysis scheduled for other specimens in the rack that carries the specimen container containing the specimen and transporting the rack to the rack storage portion by the transport mechanism, and
the control unit performs the first control when a dispensing abnormality occurs in the specimen while the second control set and a predetermined condition is satisfied.

2. The automatic analysis device according to claim 1, wherein the dispensing abnormality includes clogging of specimen.

3. The automatic analysis device according to claim 1, wherein the dispensing abnormality includes empty suction of specimen.

4. The automatic analysis device according to claim 1, further comprising a display device, wherein a user is able to operate the automatic analysis device by directly touching the display device.

5. The automatic analysis device according to claim 2, wherein which of the first control and the second control is to be performed when clogging of specimen occurs is able to be selectively set in advance.

6. The automatic analysis device according to claim 3, wherein which of the first control and the second control is to be performed when empty suction of specimen occurs is able to be selectively set in advance.

7. The automatic analysis device according to claim 4, wherein the control unit stores a time when the user operates the automatic analysis device via the display device.

8. The automatic analysis device according to claim 7, wherein the predetermined condition includes a condition that a predetermined period of time or more elapses since the last time the user operated the automatic analysis device via the display device.

9. The automatic analysis device according to claim 1, wherein the predetermined condition includes a condition that a predetermined period of time or more elapses since the last time the transport mechanism transported the rack to the dispensing mechanism.

10. The automatic analysis device according to claim 6, wherein the predetermined condition includes a condition that the specimen in which empty suction occurred is a trace specimen.

11. The automatic analysis device according to claim 1, wherein the control unit performs the second control when a dispensing abnormality of the specimen occurs a plurality of times consecutively while the first control is set.

12. The automatic analysis device according to claim 1, wherein, when a dispensing abnormality of the specimen occurs while the second control is set and an undispensed trace specimen exists in the rack carrying the specimen container containing the specimen, the control unit continues analysis scheduled for the trace specimen and cancels analysis scheduled for specimens other than the trace specimen.

13. The automatic analysis device according to claim 1, wherein the control unit receives an input of a start time of a time slot in which the second control is set.

14. The automatic analysis device according to claim 1, wherein the control unit receives an input of an end time of a time slot in which the second control is set.

15. An automatic analysis method using an automatic analysis device including,
a transport mechanism that transports a rack carrying a plurality of specimen containers containing specimens to be analyzed to a dispensing mechanism,
a dispensing mechanism that dispenses the specimens carried in the rack transported by the transport mechanism,
a rack storage portion that stores the rack at a position from which the rack is able to be taken out, and
a control unit that performs a preset control of a first control or a second control, wherein
the first control is a control for, when a dispensing abnormality occurred in the specimen, continuing analysis scheduled for other specimens in the rack that carries the specimen container containing the specimen,
the second control is a control for, when a dispensing abnormality occurred in the specimen, canceling analysis scheduled for other specimens in the rack that carries the specimen container containing the specimen and transporting the rack to the rack storage portion by the transport mechanism, and
the automatic analysis method includes causing the control unit to perform the first control when a dispensing abnormality occurs in the specimen while the second control is set and a predetermined condition is satisfied.
